# EUROPÄISCHE PATENTSCHRIFT

(11) **EP 2 601 400 B1**
(45) Veröffentlichungstag und Bekanntmachung des Hinweises auf die Patenterteilung: **17.09.2014**
(21) Anmeldenummer: 11736101.4
(22) Anmeldetag: 27.07.2011
(51) Int. Cl.: F02M 65/00

(54) **HALTEVORRICHTUNG FÜR KRAFTSTOFFINJEKTOR**
MOUNTING DEVICE FOR FUEL INJECTOR
DISPOSITIF DE MONTAGE D'UN INJECTEUR DE CARBURANT

(30) Priorität: 02.08.2010 DE 102010038760
(43) Veröffentlichungstag der Anmeldung: 12.06.2013
(73) Patentinhaber: Robert Bosch GmbH, 70442 Stuttgart (DE)
(72) Erfinder: STAIB, Joerg, 73087 Boll (DE); KORDASS, Sven, 73257 Köngen (DE); HOSS, Reinhard, 73207 Plochingen (DE); PARUCHURI, Neela Lohith, N.S Palaya Bengaluru 560076 (IN)
(86) Internationale Anmeldenummer: PCT/EP2011/062886
(87) Internationale Veröffentlichungsnummer: WO 2012/016894

(56) Entgegenhaltungen:
- EP-A2- 0 153 142
- DE-B- 1 104 198
- FR-A- 1 320 464

## Beschreibung

Die Erfindung betrifft eine Haltevorrichtung für einen Kraftstoffinjektor, insbesondere eine Haltevorrichtung für einen Kraftstoffinjektor zur Verwendung in einem Prüfstand.

### Stand der Technik

Um Kraftstoffinjektoren in einem Prüfstand zu prüfen, wird der zu prüfende Kraftstoffinjektor in einer Haltevorrichtung aufgespannt, mit einer Fluidzufuhr verbunden und elektrisch angesteuert. Die Einspritz- und Rücklaufmengen werden gemessen und ausgewertet siehe EP 0 153 142 A sowie DE 1104198 B.

Die bekannten Aufspann- und Haltevorrichtungen für Kraftstoffinjektoren sind aufwändig und/oder teuer.

Es ist daher eine Aufgabe der vorliegenden Erfindung, eine verbesserte Aufspann- und Haltevorrichtung für Kraftstoffinjektoren bereitzustellen, die einfach zu bedienen und kostengünstig herzustellen ist, ohne die Genauigkeit und Reproduzierbarkeit der Messergebnisse negativ zu beeinflussen.

### Offenbarung der Erfindung

Eine erfindungsgemäße Haltevorrichtung für einen Kraftstoffinjektor hat eine Aufnahme, die zum Aufnehmen eines Bereichs eines Kraftstoffinjektors ausgebildet ist, und eine Fixiervorrichtung, die ein erstes Teil und ein zweites Teil hat, welche in Bezug auf die Aufnahme verschiebbar in einer Führung gelagert sind. Das zweite Teil ist derart an der Führung fixierbar, dass er nicht länger verschiebbar ist, und zwischen dem ersten Teil und dem zweiten Teil der Fixiervorrichtung ist ein elastisches Element derart angeordnet, dass es den ersten Teil der Fixiervorrichtung elastisch auf dem zweiten Teil abstützt und in der Lage ist, das erste Teil der Fixiervorrichtung so gegen einen in der Aufnahme angeordneten Kraftstoffinjektor zu drücken, dass dieser sicher in der Aufnahme fixiert ist.

Die Aufnahme ist vorteilhafterweise der Injektoraufnahme in einem Zylinderkopf nachempfunden und ermöglicht eine besonders realitätsnahe Aufnahme des zu prüfenden Kraftstoffinjektors. Durch die Verschiebbarkeit der Fixiervorrichtung kann die Haltevorrichtung stufenlos an die Länge des jeweiligen Kraftstoffinjektors angepasst werden. Durch das elastische Element ist der Kraftstoffinjektor mit einer definierten Anpresskraft gegen die Aufnahme drückbar und in der Haltevorrichtung fixierbar. Dies hat eine gute Reproduzierbarkeit der Messergebnisse zur Folge.

In einer Ausführungsform weist die Haltevorrichtung eine Exzenterwelle auf, die zwischen einer Klemmposition, in der das elastische Element das erste Teil der Fixiervorrichtung gegen den Kraftstoffinjektor drückt, und einer Freigabeposition, in der das elastische Element keine Kraft auf das erste Teil der Fixiervorrichtung ausübt, verstellbar, insbesondere drehbar ist. Durch eine solche Exzenterwelle ist der Kraftstoffinjektor besonders einfach, insbesondere ohne Werkzeug, und zuverlässig mit einer definierten Anpresskraft in der Haltevorrichtung fixierbar.

In einer Ausführungsform ist im ersten Teil der Fixiervorrichtung eine Einspritzkammer derart ausgebildet, dass der Kraftstoffinjektor im Prüfbetrieb Fluid in die Einspritzkammer einspritzt. Durch die Integration einer Einspritzkammer in die Fixiervorrichtung wird der Aufbau eines Prüfstandes mit einer erfindungsgemäßen Haltevorrichtung vereinfacht. Insbesondere wird der Kraftstoffinjektor durch die Haltevorrichtung automatisch in einer definierten Position in Bezug auf die Einspritzkammer fixiert. Die Genauigkeit und Reproduzierbarkeit der Messergebnisse im Prüfbetrieb werden so weiter verbessert.

In einer Ausführungsform ist die Aufnahme zum Aufnehmen einer auswechselbaren Klemmplatte ausgebildet, wobei der Kraftstoffinjektor in der Klemmplatte aufnehmbar und fixierbar ist. Eine erfindungsgemäße Haltevorrichtung ist durch die Verwendung verschiedener, entsprechend angepasster Klemmplatten einfach und kostengünstig an unterschiedliche, auch zukünftige, Injektortypen anpassbar.

Durch auswechselbare Klemmplatten, die jeweils individuell an den zu prüfenden Injektortyp angepasst sind, kann der Kraftstoffinjektor besonders realitätsnah in der Aufnahme aufgenommen und von dieser gehalten werden. Insbesondere können mechanische Verspannungen, welche die Messergebnisse negativ beeinflussen könnten, weitgehend vermieden werden. Durch die Auswechselbarkeit der Klemmplatten ist die Haltevorrichtung zur optimalen Aufnahme einer Vielzahl unterschiedlicher Injektortypen geeignet.

In einer Ausführungsform ist ein auswechselbarer Prüfadapter vorgesehen, der ausgebildet ist, um dem Kraftstoffinjektor im Prüfbetrieb ein (Prüf-)Fluid zuzuführen.

Durch einen auswechselbaren Prüfadapter kann dem Kraftstoffinjektor im Prüfbetrieb Fluid unter realistischen Bedingungen zugeführt werden. Zur Fluidzufuhr können starre Prüfdruckleitungen, die günstiger und haltbarer als flexible Hochdruckschläuche sind, verwendet werden. Da die Prüfdruckleitungen nicht gebogen werden müssen, können insbesondere auch stärkere Druckleitungen mit größerem Außendurchmesser, die nicht manuell biegbar sind, verwendet werden. Dadurch, dass die Leitungen nicht gebogen werden, wird ihre Lebensdauer erhöht. Bei autofrettierten Leitungen wird verhindert, dass die Autofrettage durch Verformen der Leitungen aufgehoben wird.

Die Prüfdruckleitungen können beim Wechseln des Kraftstoffinjektors in Verbindung mit dem Prüfadapter bleiben und müssen nicht an- und abgeschraubt werden. Das Auswechseln des Prüfadapters wird so erleichtert. Durch stehend ausgebildete Druckrohrstutzen können keine durch eine Torsion des Druckrohrstutzens verursachten (Verspannungs-)Kräfte entstehen, welche die Messergebnisse verfälschen könnten.

In einer Ausführungsform ist der Prüfadapter in Bezug auf die Aufnahme verschiebbar ah der Haltevorrichtung angebracht. Dies ermöglicht ein einfaches und bequemes Einbringen des zu prüfenden Kraftstoffinjektors in die Haltevorrichtung und ein Anpassen an verschiedene Injektorlängen.

In einer Ausführungsform ist der Prüfadapter ausgebildet, um den Kraftstoffinjektor elastisch in der Aufnahme zu fixieren. Das Einbringen und Fixieren des Kraftstoffinjektors in die erfindungsgemäße Haltevorrichtung wird dadurch vereinfacht.

In einer Ausführungsform ist das zweite Teil der Fixiervorrichtung durch eine Klemmvorrichtung an der Führung fixierbar. Durch eine Klemmvorrichtung ist das zweite Teil der Fixiervorrichtung besonders einfach und zuverlässig in einer beliebigen Position an der Führung fixierbar.

Die Erfindung umfasst auch eine Aufspannvorrichtung für Kraftstoffinjektoren mit wenigstens einer Haltevorrichtung, wobei die wenigstens eine Haltevorrichtung elastisch gelagert an der Aufspannvorrichtung befestigt ist. Durch eine elastische Lagerung der Haltevorrichtung werden auf den Kraftstoffinjektor und/oder die Kraftstoffzuleitungen wirkende Querkräfte minimiert. Dadurch werden sowohl die Haltbarkeit der Kraftstoffzuleitungen als auch die Reproduzierbarkeit und Genauigkeit der Prüfergebnisse verbessert.

Eine erfindungsgemäße Aufspannvorrichtung ist ggf. durch die Verwendung neuer, angepasster Haltevorrichtungen einfach und kostengünstig an zukünftige Injektortypen anpassbar.

In einer Ausführungsform weist die Aufspannvorrichtung eine Verteilerschiene (Verteilerrail) auf, die in Bezug auf die wenigstens eine Haltevorrichtung verschiebbar gelagert ist. Durch eine verschiebbare Verteilerschiene, die ausgebildet ist, um die zu prüfenden Kraftstoffinjektoren mit Fluid zu versorgen, ist es möglich, unterschiedlichste Injektortypen mit denselben starren Fluidleitungen anzuschließen. Eine erfindungsgemäße Aufspannvorrichtung ist daher für eine Vielzahl unterschiedlicher Injektortypen geeignet, wobei haltbare und kostengünstige starre Fluidleitungen mit hoher Druckfestigkeit verwendet werden können.

In einer Ausführungsform werden flexible Druckschläuche anstelle von starren Prüfdruckleitungen verwendet.

In einer Ausführungsform werden mehrere Verteilerschienen verwendet, um die Kraftstoffinjektoren mit Fluid zu versorgen.

In einer Ausführungsform sind die Haltevorrichtungen kardanisch an der Aufspannvorrichtung aufgehängt. Eine kardanische Aufhängung ermöglicht eine besonders große Flexibilität bei der räumlichen Orientierung der Haltevorrichtungen bzw. der eingespannten Kraftstoffinjektoren.

In einer Ausführungsform ist ein flexibler, in sich beweglicher Hochdruckadapter zwischen einer starren Fluidleitung und dem eingespannten Kraftstoffinjektor angeordnet. Ein solcher flexibler Hochdruckadapter ermöglicht es, Verschiebungen zwischen der starren Fluidleitung und dem eingespannten Kraftstoffinjektor weitgehend auszugleichen und mechanische Spannungen im Prüfaufbau zu minimieren.

Die Erfindung wird im Folgenden anhand der beiliegenden Figuren näher erläutert.

Dabei zeigt:
Figur 1 eine perspektivische Frontansicht einer Aufspannvorrichtung mit drei erfindungsgemäßen Haltevorrichtungen;
Figur 2 eine Seitenansicht einer erfindungsgemäßen Haltevorrichtung;
Figur 3 eine Frontansicht einer erfindungsgemäßen Haltevorrichtung; und
Figur 4 eine perspektivische Ansicht eines Ausschnitts einer erfindungsgemäßen Aufspannvorrichtung.

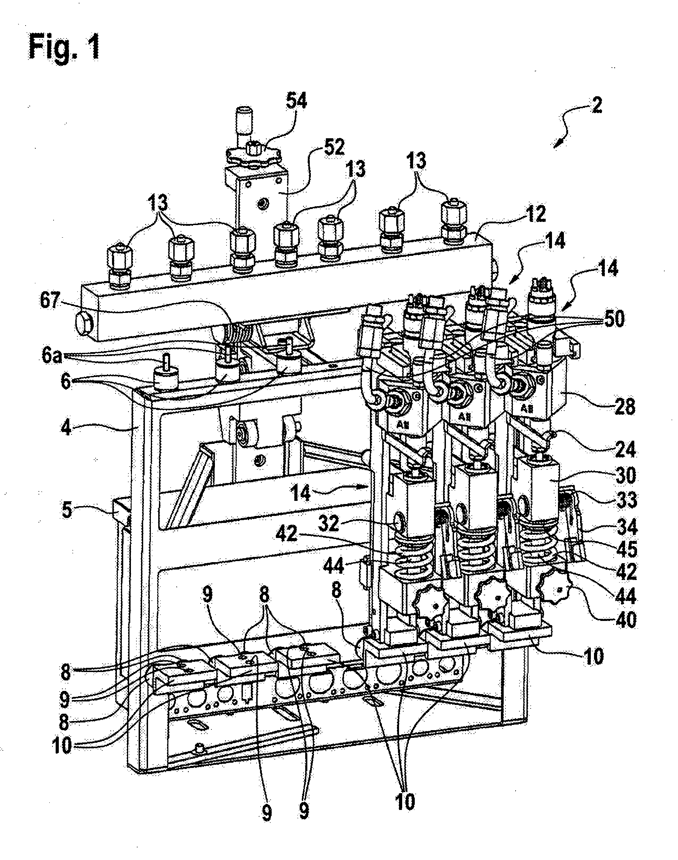

Figur 1 zeigt eine perspektivische Frontansicht einer erfindungsgemäßen Aufspannvorrichtung 2.

Die erfindungsgemäße Aufspannvorrichtung 2 weist eine vertikal verlaufende Führungsschiene 52 auf, die z.B. aus Flachstahl geformt ist. An der Führungsschiene sind ein Rahmen 4, der zur Aufnahme mehrerer erfindungsgemäßer Haltevorrichtungen 14 ausgebildet ist, und eine in Bezug auf den Rahmen 4 parallel zur Führungsschiene 52 verschiebbar gelagerte Verteilerschiene (Verteilerrail) 12 angebracht.

Die Verteilerschiene 12 weist auf ihrer Oberseite eine Anzahl von Fluidanschlussstutzen 13 auf, die jeweils zum Anschließen von in der Figur nicht gezeigten Fluidzuführungsleitungen ausgebildet sind.

Auf einer oberen Stirnseite des Rahmens 4 sind mehrere zylinderförmig ausgebildete erste elastische Elemente 6 angeordnet, auf deren von dem Rahmen 4 abgewandter Oberseite jeweils ein Zylinderbolzen 6a ausgebildet ist, der zur Aufnahme und Befestigung jeweils einer erfindungsgemäßen Haltevorrichtung 14 vorgesehen ist.

In einem unteren Bereich des Rahmens 4 sind auf der dem Betrachter zugewandten Vorderseite des Rahmens 4 zweite zylinderförmig ausgebildete elastische Elemente 8 angeordnet, die in Bezug auf die ersten elastischen Elemente 6 um 90° gedreht angeordnet sind, so dass ihre Achsen in einer horizontalen Ebene quer zur Ebene des Rahmens 4 verlaufen.

An jeweils zwei benachbarten zweiten elastischen Elementen 8 ist ein Winkel 10 mit einem vertikalen Schenkel, der parallel zur Ebene des Rahmens 4 ausgerichtet ist, und einem horizontalen Schenkel, der in einem rechten Winkel zum vertikalen Schenkel ausgerichtet ist, befestigt. In jedem der horizontalen Schenkel sind jeweils zwei Bohrungen 9 zur Aufnahme und Fixierung jeweils einer erfindungsgemäßen Haltevorrichtung 14 ausgebildet.

Der Rahmen 4 ist derart ausgebildet, dass auf seiner dem Betrachter abgewandten Rückseite ein Ansteuergerät 5, das zum Ansteuern der zu prüfenden Kraftstoffinjektoren ausgebildet ist, montierbar ist.

In dem in der Figur 1 gezeigten Ausführungsbeispiel sind drei erfindungsgemäße Haltevorrichtungen 14 an dem Rahmen 4 angebracht. Durch die elastischen Elemente 6, 8 sind die Haltevorrichtungen 14 elastisch gelagert, so dass Toleranzen der Abmessungen der Kraftstoffinjektoren und/oder der Fluidleitungen durch Verformen der elastischen Elemente 6, 8 ausgleichbar sind und nur geringe seitliche Kräfte auf die in der Figur 1 nicht gezeigten Kraftstoffinjektoren wirken, wenn sie in die Haltevorrichtungen 14 eingespannt sind.

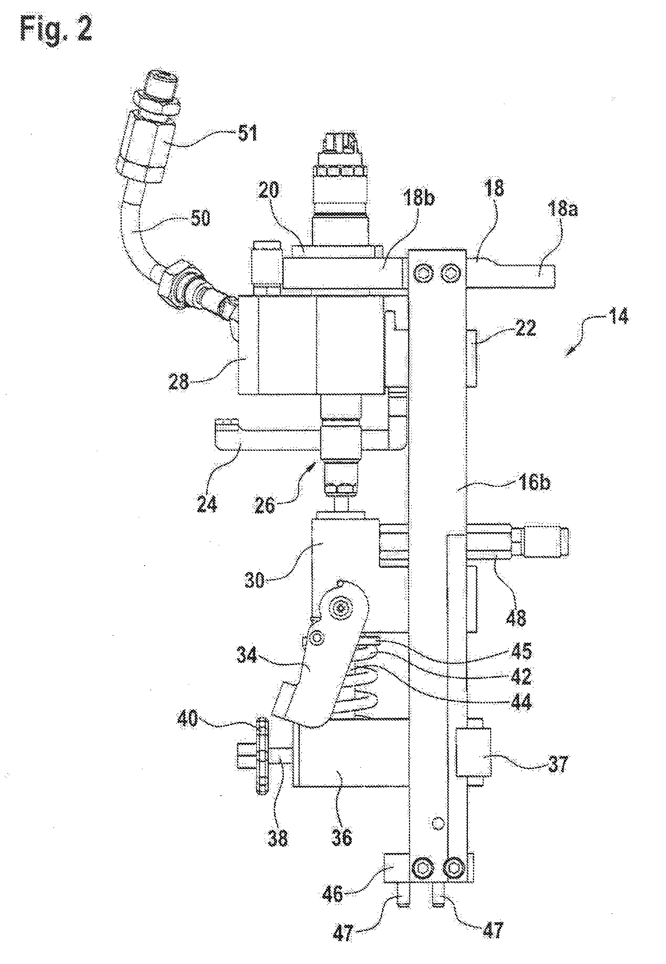

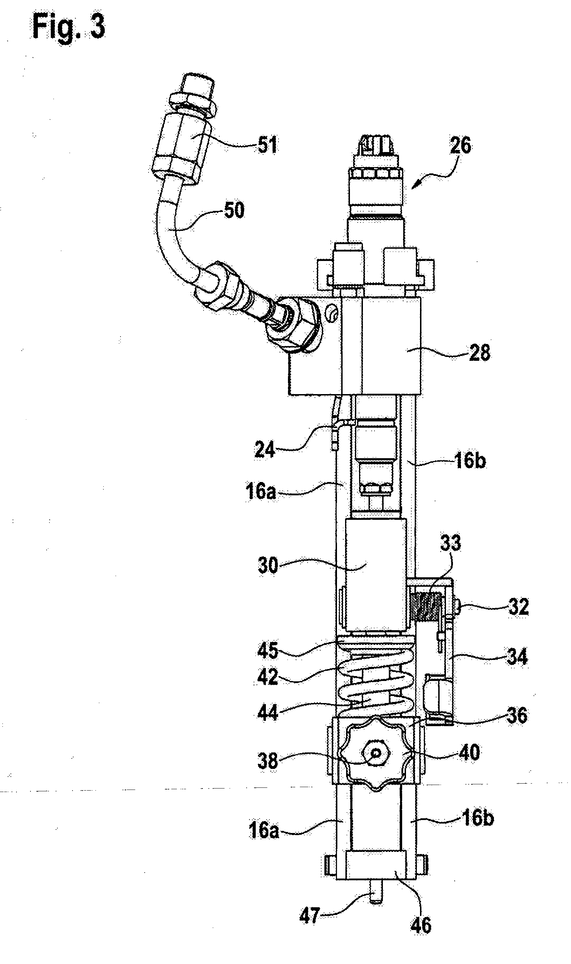

Ein Ausführungsbeispiel einer erfindungsgemäßen Haltevorrichtung 14 wird im Folgenden unter Bezugnahme auf die Figuren 2 und 3 im Detail beschrieben.

Eine erfindungsgemäße Haltevorrichtung 14 weist eine vertikale Führung auf, die durch zwei parallel zueinander angeordnete, in vertikaler Richtung verlaufende Metallplatten 16a, 16b gebildet ist.

Die beiden Metallplatten 16a, 16b sind an ihrem oberen Enden durch eine Aufnahme 18 und an ihrem unteren Enden durch einen Halter 46 miteinander verbunden, so dass die beiden Metallplatten 16a, 16b, die obere Aufnahme 18 und der untere Halter 46 einen im Wesentlichen rechteckigen Rahmen bilden.

Der untere Halter 46 hat zwei Bolzen 47, welche in die in dem horizontalen Schenkel eines an dem Rahmen 4 montierten Winkels 10 ausgebildet Bohrungen 9 (siehe Figur 1) einführbar sind, um die Haltevorrichtung 14 an dem Rahmen 4 zu montieren.

Die obere Aufnahme 18 hat einen hinteren Bereich 18a, der mit einer in den Figuren nicht sichtbaren senkrechten, d.h. parallel zu den Metallplatten 16a, 16b verlaufenden, Bohrung ausgebildet ist, die vorgesehen ist, den Zylinderbolzen 6a eines ersten elastischen Elements 6, wie es an der oberen Stirnseite des Rahmens 4 montiert ist, aufzunehmen, um die Haltevorrichtung 14 an dem Rahmen 4 zu fixieren.

Ein vorderer Bereich 18b der oberen Aufnahme 18 ist ausgebildet, um eine auswechselbare Klemmplatte 20 aufzunehmen, die vorzugsweise individuell an den jeweils in der Haltevorrichtung 14 aufzunehmenden Injektortyp angepasst ist. Ein zu prüfender Kraftstoffinjektor 26 wird mit Hilfe einer geeignete Klemmplatte 20 in der oberen Aufnahmevorrichtung 18 gehalten.

Unterhalb der oberen Aufnahme 18 ist zwischen den Führungsschienen 16a, 16b eine verschiebbare Adapteraufnahme 22 zur Aufnahme eines vorzugsweise injektorspezifischen Prüfadapters 28 vorgesehen. Der Prüfadapter 28 ist mit einer Fluidzuleitung (Hochdrucklanze) 50 verbunden und ausgebildet, um dem zu prüfenden Kraftstoffinjektor 26 im Prüfbetrieb das durch die Fluidzuleitung 50 bereitgestellte Fluid zuzuführen. Der Prüfadapter 28 hat auf seiner den Führungsschienen 16a, 16b zugewandten Rückseite eine zur Adapteraufnahme 22 passende Nut und ein Langloch zur Aufnahme in die Adapteraufnahme 22.

Unterhalb des derart positionierten Prüfadapters 18 ist eine entlang der Führungsschienen 16a, 16b verschiebbar gelagerte, zweiteilige Fixiervorrichtung 30, 36 angeordnet. Die Fixiervorrichtung 30, 36 ist zur Anpassung an die Länge des Kraftstoffinjektors 26 stufenlos entlang der Führungsschienen 16a, 16b verschiebbar, so dass der Abstand zwischen der Fixiervorrichtung 30, 36 und der oberen Aufnahme 28 durch Verschieben der Fixiervorrichtung 30, 36 veränderbar ist. Die zweiteilige Fixiervorrichtung 30, 36 weist ein oberes, erstes Teil 30, das dem Kraftstoffinjektor 26 zugewandt ist, und ein unteres, zweites Teil 36 auf, das auf der von dem Kraftstoffinjektor 26 abgewandten Seite des oberen Teils 30 angeordnet ist.

Das zweite Teil 36 weist einen Grundkörper 37 auf, der verschiebbar zwischen den Führungsschienen 16a, 16b gelagert ist. In einem rechten Winkel zu den Führungsschienen 16a, 16b verläuft eine Welle 38 durch das zweite Teil 36 und den Raum zwischen den Führungsschienen 16a, 16b. Am in der Figur 2 links dargestellten vorderen Ende der Welle 38 ist ein Handrad 40 befestigt und an dem gegenüberliegenden hinteren Ende der Welle 38 ist ein in den Figuren nicht sichtbares Klemmstück mit innen ausgesparten Keilflächen angebracht. An den Führungsschienen 16a, 16b sind mit dem Klemmstück korrespondierende Schrägen ausgebildet.

Durch Drehen des Handrades 40 und der Welle 38 kann ein Verkeilen der in den Führungsschienen 16a, 16b ausgebildeten Schrägen mit den Keilflächen des Klemmstücks bewirkt werden. So ist das zweite Teil 36 der Fixiervorrichtung 30, 36 durch Drehen des Handrades 40 so an den Führungsschienen 16a, 16b fixierbar, dass ein Verschieben des zweiten Teils 36 entlang der Führungsschienen 16a, 16b nicht mehr möglich ist.

Das obere, erste Teil 30 der Fixiervorrichtung 30, 36 ist durch ein elastisches Federelement 42, das mit einem Führungsbolzen 44, einem Federteller 45 und einem Halteteil auf dem zweiten Teil 36 montiert ist, elastisch auf dem zweiten Teil 36 abgestützt.

Im ersten Teil 30 ist eine Einspritzkammer ausgebildet, welche im Prüfbetrieb das von dem Kraftstoffinjektor 26 ausgegebene Fluid aufnimmt. Das Fluid wird über eine Ablaufleitung 48 aus der Einspritzkammer an eine Messvorrichtung geleitet, um das Volumen des von dem Kraftstoffinjektor 26 ausgegebenen Fluids zu messen.

Im ersten Teil 30 ist eine Exzenterwelle 32 angeordnet, die durch einen an einem äußeren Ende der Exzenterwelle 32 angebrachten Exzenterwellenhebel 34 um ihre Längsachse drehbar ist.

Um den Prüfadapter 28 mit dem Kraftstoffinjektor 26 in die Haltevorrichtung 14 einzuhängen, wird die Adapteraufnahme 22 über einen mit der Adapteraufnahme 22 verbundenen Hebel 24 nach unten gedrückt und der Kraftstoffinjektor mit dem an ihm montieren Prüfadapter 28 in eine passende Klemmplatte 20, die in der Aufnahme 18 angeordnet ist, eingeführt. Nach dem Zurückstellen der Adapteraufnahme 22 durch Zurückschieben des Hebels 24 ist der Prüfadapter 28 mit dem Kraftstoffinjektor 26 mit Hilfe der Klemmplatte 20 in der Aufnahme 18 positioniert.

Um den Kraftstoffinjektor 26 in der Haltevorrichtung 14 zu fixieren, wird bei gelöster Klemmvorrichtung das zweite Teil 36 der Fixiervorrichtung 30, 36 soweit entlang der Führungsschienen 16a, 16b verschoben, bis eine obere Stirnseite des oberen, ersten Teils 30 der Fixiervorrichtung 30, 36 die untere, der Fixiervorrichtung 30, 36 zugewandte Stirnfläche der Düsenspannmutter des Kraftstoffinjektors 26 berührt. Durch Drehen des Handrades 40 wird die Klemmvorrichtung aktiviert und das zweite Teil 36 der Fixiervorrichtung 30, 36 an den Führungsschienen 16a, 16b arretiert. Anschließend wird die Exzenterwelle 32 durch Betätigen des Exzenterwellenhebels 34 gedreht. Die gedrehte Exzenterwelle 32 drückt auf den Führungsbolzen 44 und damit auf das elastische Federelement 42. Der Kraftstoffinjektor 28 wird mit der Vorspannkraft und der Zusatzkraft, die sich aus dem Federweg des elastischen Federelements 42 ergibt, zwischen der unteren Stirnseite der Düsenspannmutter des Kraftstoffinjektors 26 und seinem oberen Ende, das in der Aufnahme 18 angeordnet ist, verspannt und sicher in der Haltevorrichtung 14 fixiert.

Der jeweils verwendete Prüfadapter 28 ist vorzugsweise injektorspezifisch. Er ist dem jeweiligen Zylinderkopf, in dem der jeweils zur prüfende Kraftstoffinjektor 26 im Betrieb eingesetzt wird, nachgebildet. Die Fluidzuleitung 50, die vorgesehen ist, um den Kraftstoffinjektor 26 im Prüfbetrieb mit Fluid zu versorgen, ist in einem entsprechenden Winkel im Prüfadapter 28 eingebaut. Um die Hochdrucklanze 50 befindet sich eine Überwurfmutter 51, welche sich bei Verdrehen der Hochdrucklanze 50 vor und zurück schiebt. Dadurch wird die Hochdrucklanze 50 selbst durch die Kontaktierung des Kraftstoffinjektors 26 nicht verdreht.

Zwischen dem Exzenterwellenhebel 34 und dem ersten Teil 30 der Fixiervorrichtung 30, 36 ist auf der Exzenterwelle 32 eine Torsionsfeder 33 montiert, die ausgebildet ist, um die Exzenterwelle 32 auch gegen die Kraft des Federelements 42 in einer gewünschten Position zu halten.

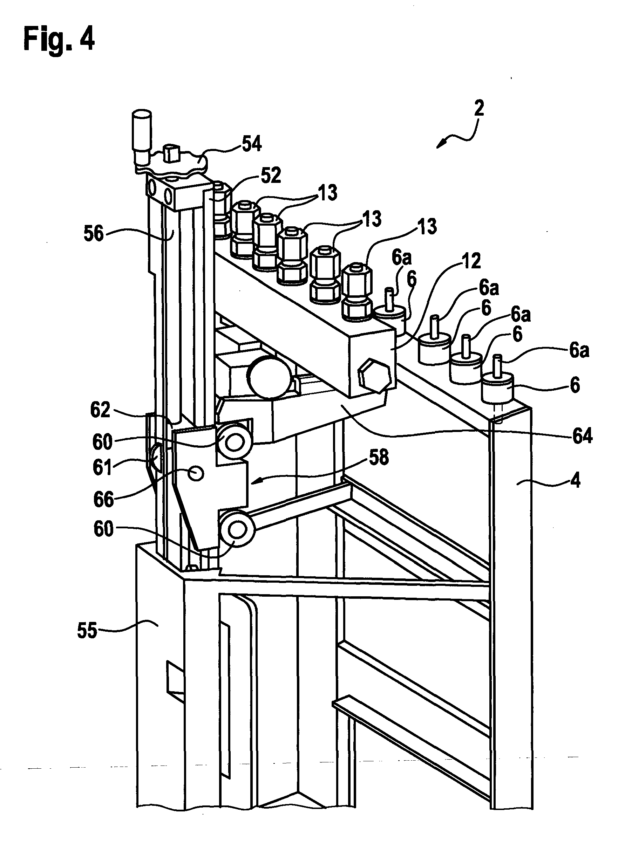

Figur 4 zeigt eine perspektivische Ansicht eines Ausschnitts aus einer erfindungsgemäßen Aufspannvorrichtung 2 von hinten, wobei in dieser Darstellung keine Haltevorrichtungen 14 am Rahmen 4 der Aufspannvorrichtung 2 montiert sind.

Diese Ansicht zeigt insbesondere, wie die Verteilerschiene 12 höhenverstellbar an der Aufspannvorrichtung 2 montiert ist. Die Höhenverstellung der Verteilerschiene 12 ist über einen Laufwagen 58 realisiert. Am Rahmen 55 der Aufspannvorrichtung 2 ist eine aus Flachstahl geformte vertikale Führung 52 befestigt. Auf der Führung 52 sitzt ein Laufwagen 58. Der Laufwagen 58 hat zur seitlichen Führung eine enge Toleranz und Laufrollen 60, 61, welche den Laufwagen 58 in der belasteten Richtung führen. Die hinteren, von dem Rahmen abgewandten Laufrollen 61 sind auf einer drehbaren Exzenterachse 66 gelagert, so dass das Spiel durch Drehen der Exzenterachse 66 einstellbar ist.

Der Laufwagen 58 wird auf der von dem Rahmen 4 abgewandten Rückseite der vertikalen Führung 52 durch eine schwimmend, nicht drehbar gelagerte Mutter 62 gehalten. Eine drehbare Spindel 56 ist mit der Mutter 62 im Eingriff. Die Spindel 56 ist an ihrem oberen Ende mit einer Kurbel 54 ausgestattet. Durch Drehen der Kurbel 54 und der Spindel 56 ist der Laufwagen 58 entlang der Führung 52 in vertikaler Richtung bewegbar.

Am Laufwagen 58 ist in einem rechten Winkel zur vertikalen Führung 52 eine Halterung 64 mit einem in der Figur 4 nicht sichtbaren Langloch angebracht. Durch das Langloch ist eine Aufnahme für die Verteilerschiene 12 verschiebbar an der Halterung 64 montiert. Die Aufnahme selbst besteht aus einem gebogenen Blech, in welchem die Verteilerschiene 12 mittels Halteplatte, Gleitlager und Achse drehbar gelagert ist. Um ein ungewolltes Verkippen der Verteilerschiene 12 zu vermeiden, wird die Verteilerschiene 12 durch eine Schwenkfeder 67, die insbesondere in der Figur 1 gut erkennbar ist, in einer aufrechten Position gehalten.

## Patentansprüche

1. Haltevorrichtung (14) für einen Kraftstoffinjektor (26) mit
einer Aufnahme (18), die zum Aufnehmen eines Kraftstoffinjektors (26) ausgebildet ist;
einer Fixiervorrichtung (30, 36), die ein erstes Teil (30) und ein zweites Teil (36) hat, die in Bezug auf die Aufnahme (18) verschiebbar in einer Führung (16a, 16b) gelagert sind,
wobei das zweite Teil (36) an der Führung (16a, 16b) fixierbar ist und
wobei zwischen dem ersten Teil (30) und dem zweiten Teil (36) der Fixiervorrichtung (30, 36) ein elastisches Element (42) derart angeordnet ist, dass es in der Lage ist, das erste Teil (30) der Fixiervorrichtung (30, 36) gegen einen in der Aufnahme (18) angeordneten Kraftstoffinjektor (26) zu drücken, um diesen in der Haltevorrichtung (14) zu fixieren.

2. Haltevorrichtung (14) nach Anspruch 1 mit einer Exzenterwelle (32), die zwischen einer Klemmposition, in der das elastische Element (42) das erste Teil (30) der Fixiervorrichtung (30, 36) gegen einen in der Aufnahme (18) angeordneten Kraftstoffinjektor (26) drückt, und einer Freigabeposition, in der das elastische Element (42) keine Kraft auf das erste Teil (30) der Fixiervorrichtung (30, 36) ausübt, drehbar ist.

3. Haltevorrichtung (14) nach Anspruch 1 oder 2, wobei im ersten Teil (30) der Fixiervorrichtung (30, 36) eine Einspritzkammer ausgebildet ist.

4. Haltevorrichtung (14) nach einem der vorangehenden Ansprüche, wobei die Aufnahme (18) zur Aufnahme einer auswechselbaren Klemmplatte (20) ausgebildet ist, in welcher der Kraftstoffinjektor (26) fixierbar ist.

5. Haltevorrichtung (14) nach einem der vorangehenden Ansprüche mit einem auswechselbaren Prüfadapter (28), der ausgebildet ist, um dem Kraftstoffinjektor (26) im Betrieb Fluid zuzuführen.

6. Haltevorrichtung (14) nach Anspruch 5, wobei der Prüfadapter (28) in Bezug auf die Aufnahme (18) verschiebbar an der Haltevorrichtung (14) angebracht ist.

7. Haltevorrichtung (14) nach Anspruch 6, wobei der Prüfadapter (28) ausgebildet ist, um den Kraftstoffinjektor (26) elastisch in der Aufnahme (18) zu fixieren.

8. Haltevorrichtung (14) nach einem der vorangehenden Ansprüche, wobei die Fixiervorrichtung (30, 36) durch eine Klemmvorrichtung (38, 40) an der Haltevorrichtung (14) fixierbar ist.

9. Aufspannvorrichtung (2) mit wenigstens einer Haltevorrichtung (14) für einen Kraftstoffinjektor (26) nach einem der vorangehenden Ansprüche, wobei die wenigstens eine Haltevorrichtung (14) elastisch gelagert an der Aufspannvorrichtung (2) befestigt ist.

10. Aufspannvorrichtung (2) nach Anspruch 9 mit einer Verteilerschiene (12), welche in Bezug auf die wenigstens eine Haltevorrichtung (14) verschiebbar gelagert ist.

## Claims

1. Holding apparatus (14) for a fuel injector (26) having a receptacle (18) which is configured for receiving a fuel injector (26); a fixing apparatus (30, 36) which has a first part (30) and a second part (36) which are mounted in a guide (16a, 16b) such that they can be displaced in relation to the receptacle (18), it being possible for the second part (36) to be fixed on the guide (16a, 16b), and an elastic element (42) being arranged between the first part (30) and the second part (36) of the fixing apparatus (30, 36) in such a way that it is capable of pressing the first part (30) of the fixing apparatus (30, 36) against a fuel injector (26) which is arranged in the receptacle (18), in order to fix the said fuel injector (26) in the holding apparatus (14).

2. Holding apparatus (14) according to Claim 1 having an eccentric shaft (32) which can be rotated between a clamping position, in which the elastic element (42) presses the first part (30) of the fixing apparatus (30, 36) against a fuel injector (26) which is arranged in the receptacle (18), and a release position, in which the elastic element (42) does not exert any force on the first part (30) of the fixing apparatus (30, 36).

3. Holding apparatus (14) according to Claim 1 or 2, an injection chamber being formed in the first part (30) of the fixing apparatus (30, 36).

4. Holding apparatus (14) according to one of the preceding claims, the receptacle (18) being configured for receiving an exchangeable clamping plate (20), in which the fuel injector (26) can be fixed.

5. Holding apparatus (14) according to one of the preceding claims having an exchangeable test adapter (28) which is configured to feed fluid to the fuel injector (26) during operation.

6. Holding apparatus (14) according to Claim 5, the test adapter (28) being attached on the holding apparatus (14) such that it can be displaced in relation to the receptacle (18).

7. Holding apparatus (14) according to Claim 6, the test adapter (28) being configured to fix the fuel injector (26) elastically in the receptacle (18).

8. Holding apparatus (14) according to one of the preceding claims, it being possible for the fixing apparatus (30, 36) to be fixed on the holding apparatus (14) by way of a gripping apparatus (38, 40).

9. Clamping apparatus (2) having at least one holding apparatus (14) for a fuel injector (26) according to one of the preceding claims, the at least one holding apparatus (14) being fastened to the clamping apparatus (2) in an elastically mounted manner.

10. Clamping apparatus (2) according to Claim 9 having a distributor rail (12) which is mounted such that it can be displaced in relation to the at least one holding apparatus (14).

## Revendications

1. Dispositif de retenue (14) pour un injecteur de carburant (26) comprenant
un logement (18) qui est réalisé pour recevoir un injecteur de carburant (26) ;
un dispositif de fixation (30, 36) qui présente une première partie (30) et une deuxième partie (36), lesquelles sont montées dans un guide (16a, 16b) de manière déplaçable par rapport au logement (18),
la deuxième partie (36) pouvant être fixée au guide (16a, 16b) et
un élément élastique (42) étant disposé entre la première partie (30) et la deuxième partie (36) du dispositif de fixation (30, 36), de telle sorte qu'il soit à même de presser la première partie (30) du dispositif de fixation (30, 36) contre un injecteur de carburant (26) disposé dans le logement (18), afin de fixer cet injecteur de carburant dans le dispositif de retenue (14).

2. Dispositif de retenue (14) selon la revendication 1, comprenant un arbre à excentrique (32) qui est rotatif entre une position de serrage dans laquelle l'élément élastique (42) presse la première partie (30) du dispositif de fixation (30, 36) contre un injecteur de carburant (26) disposé dans le logement (18) et une position de libération dans laquelle l'élément élastique (42) n'exerce aucune force sur la première partie (30) du dispositif de fixation (30, 36).

3. Dispositif de retenue (14) selon la revendication 1 ou 2, dans lequel une chambre d'injection est réalisée dans la première partie (30) du dispositif de fixation (30, 36).

4. Dispositif de retenue (14) selon l'une quelconque des revendications précédentes, dans lequel le logement (18) est réalisé pour la réception d'une plaque de serrage (20) interchangeable dans laquelle l'injecteur de carburant (26) peut être fixé.

5. Dispositif de retenue (14) selon l'une quelconque des revendications précédentes comprenant un adaptateur d'essai (28) interchangeable qui est réalisé pour acheminer du fluide jusqu'à l'injecteur de carburant (26) lors du fonctionnement.

6. Dispositif de retenue (14) selon la revendication 5, l'adaptateur d'essai (28) étant monté sur le dispositif de retenue (14) de manière déplaçable par rapport au logement (18).

7. Dispositif de retenue (14) selon la revendication 6, dans lequel l'adaptateur d'essai (28) est réalisé pour fixer l'injecteur de carburant (26) élastiquement dans le logement (18).

8. Dispositif de retenue (14) selon l'une quelconque des revendications précédentes, dans lequel le dispositif de fixation (30, 36) peut être fixé au dispositif de retenue (14) au moyen d'un dispositif de serrage (38, 40).

9. Dispositif de montage (2) comprenant au moins un dispositif de retenue (14) pour un injecteur de carburant (26) selon l'une quelconque des revendications précédentes, l'au moins un dispositif de retenue (14) étant fixé au dispositif de montage (2) de manière montée élastiquement.

10. Dispositif de montage (2) selon la revendication 9 comprenant un rail distributeur (12), lequel est monté de manière déplaçable par rapport à l'au moins un dispositif de retenue (14).
